# EUROPÄISCHE PATENTSCHRIFT

(11) **EP 2 260 206 B1**
(45) Veröffentlichungstag und Bekanntmachung des Hinweises auf die Patenterteilung: **09.03.2016**
(21) Anmeldenummer: 09719643.0
(22) Anmeldetag: 10.03.2009
(51) Int. Cl.: F03D 7/02

(54) **VORRICHTUNG ZUR VERSTELLUNG DES ANSTELLWINKELS EINES ROTORBLATTES EINER WINDENERGIEANLAGE**
DEVICE FOR ADJUSTING THE ANGLE OF ATTACK OF A ROTOR BLADE OF A WIND POWER PLANT
DISPOSITIF DE REGLAGE DE L'ANGLE D'INCIDENCE DE LA PALE DE ROTOR D'UNE EOLIENNE

(30) Priorität: 12.03.2008 DE 102008013926
(43) Veröffentlichungstag der Anmeldung: 15.12.2010
(73) Patentinhaber: VENSYS Energy AG, 66539 Neunkirchen (DE)
(72) Erfinder: MASCIONI, Andreas, 66346 Püttlingen (DE); RINCK, Jürgen, 66399 Mandelbachtal (DE)
(74) Vertreter: Bernhardt, Reinhold
(86) Internationale Anmeldenummer: PCT/DE2009/000342
(87) Internationale Veröffentlichungsnummer: WO 2009/112024

(56) Entgegenhaltungen:
- DE-A1- 4 221 783
- DE-A1-102004 046 260
- DE-C1- 3 722 022
- DE-T2- 60 218 737
- GB-A- 144 038
- JP-A- 2003 322 218

## Beschreibung

Die Erfindung betrifft eine Vorrichtung zur Verstellung des Anstellwinkels eines Rotorblattes einer Windenergieanlage, mit einem flexiblen, durch ein Antriebsrad bewegbaren Hülltriebstrang, über den das Rotorblatt in entgegengesetzten Richtungen um seine Längsachse drehbar ist, wobei der Hülltriebstrang in nur einer einzigen, zur Drehachse des Antriebsrads senkrechten Ebene bewegbar ist, dass der Hülltriebstrang an einem ein Endstück des Rotorblattes bildenden Drehlagerring angreift, und dass das Antriebsrad mit einer an der Nabe des Rotorblatts montierten Motor-/ Getriebeeinheit zur individuellen Verstellung des Rotorblattes verbunden ist.

Eine solche Vorrichtung geht aus der DE 602 18 737 T2 hervor, die einen durch einen Zahnriemen angetriebenen Pitchantrieb aufweist. Der Zahnriemen umfasst einen Bereich einer Rotornabe, die mit dem Rotorblatt verbunden ist.

Aus der DE 42 21 783 C2 geht eine Vorrichtung hervor, welche die eingangs erwähnten Merkmale aufweist und in der als Hülltriebstrang ein geschlossener Zahnriemen dient, der das Rotorblatt umschlingt und in eine am Rotorblatt gebildete Außenzahnung eingreift. Die Außenzahnung ist seitlich angrenzend an ein das Rotorblatt mit der Rotornabe verbindendes Drehlager angeordnet. Der genannte Zahnriemen wird um 90° verdreht und ferner durch eine Rolle um 90° umgelenkt, so dass er sich im Eingriff mit einer gezahnten Riemenscheibe befindet, die auf einer zur Rotordrehachse parallelen Welle sitzt.

Bekanntermaßen sind Windenergieanlagen mit Vorrichtungen zur Rotorblattverstellung ausgerüstet, um die Leistung der Anlagen den Windverhältnissen anzupassen, insbesondere bei starkem Wind deren Leistung zu begrenzen. Es werden Vorrichtungen sowohl zur individuellen als auch zur gemeinsamen Verstellung der Rotorblätter eingesetzt.

Der Erfindung liegt die Aufgabe zugrunde, eine Vorrichtung zur Rotorblattverstellung der eingangs erwähnten Art zu schaffen, die sicherer arbeitet.

Die diese Aufgabe lösende Vorrichtung nach der Erfindung ist dadurch gekennzeichnet, dass der Hülltriebstrang offen und an seinen Enden mit dem Drehlagerring verbunden ist.

Die Umschlingung des Drehlagerrings wird vorzugsweise so weit reduziert, dass nicht mehr als die üblicher Weise für Windkraftanlagen erforderliche Verstellung des Rotorblattes um 90 ± 5° möglich ist.

Allein die erfindungsgemäße Bewegung des Hülltriebstrangs in nur einer Ebene erlaubt gegenüber dem Stand der Technik eine wesentlich vereinfachte Konstruktion. Vorteilhaft nimmt der Außenring des Drehlagers, der das Rotorblatt an seinem der Rotornabe zugewandten Ende verstärkt, unmittelbar die durch den Hülltriebstrang übertragenen Kräfte auf. Gesonderte, auf das Zusammenwirken mit dem Hülltriebstrang gerichtete bauliche Maßnahmen am Rotorblatt können entfallen. Der Drehlagerring kann seiner zusätzlichen Funktion zur Drehmomentaufnahme ohne irgendwelche Verstärkungsmaßnahmen gerecht werden. Durch die Möglichkeit zur individuellen Rotorblattverstellung kann es weder zu fehlerbedingtem Ausfall der Verstellmöglichkeit aller Rotorblätter noch zu deren Blockierung kommen.

Zweckmäßig erfolgt die Verbindung, mit dem Drehlagerring jeweils über ein massives Endstück, welches z.B. eine Klemmhalterung für den übrigen Hülltriebstrang bildet. Das massive Endstück kann mit dem Drehlagerring z.B. verschraubt sein, so dass sich die Verbindung bei einem Wechsel des Hülltriebstrangs leicht lösen und wieder herstellen lässt.

Vorzugsweise ist die Verbindung der Hülltriebstrangenden mit dem Drehlagerring an solchen Umfangspositionen vorgesehen und das Antriebsrad derart nah am Umfang des Rotorblattes angeordnet, dass der Hülltriebstrang in jeder Drehposition des Rotorblattes den Drehlagerring über einen Teil seines Umfangs umschlingt.

In jedem Fall sind die Positionen der Verbindung zwischen Hülltriebstrang und Drehlagerring bzw. die Länge des offenen Hülltriebstrangs so gewählt, dass sich ein gewünschter Verstellbereich des Drehwinkels ergibt.

Bei dem flexiblen Hülltriebstrang handelt es sich vorzugsweise um einen Riemen mit einer Zahnung. Entsprechend weist auch das Antriebsrad eine Zahnung auf.

Alternativ bildet in einer Ausführungsform der Erfindung eine Kette den flexiblen Hülltriebstrang und das Antriebsrad ein gezahntes Kettenrad. Zweckmäßig wird eine Zahnkette, insbesondere eine Wiegegelenk-Zahnkette, eingesetzt.

In den genannten Ausführungsformen mit einem Zahnriemen oder einer Kette als Hülltriebstrang könnte der Drehlagerring zweckmäßig mit einer Außenzahnung versehen sein, wenigstens im Umschlingungsbereich oder einem Teil des Umschlingungsbereichs.

Der flexible Hülltriebstrang ließe sich durch Verschiebung der Verbindungsposition einer oder beider Klemmhalterungen in Umfangsrichtung am Drehlagerring spannen.

Alternativ oder zusätzlich ließe sich der Hülltriebstrang durch das Antriebsrad spannen, das zu diesem Zweck in geeignetem radialen Abstand von dem Drehlagerring angeordnet wird.

Zum Spannen des Hülltriebstrangs könnte ferner wenigstens eine Spannrolle vorgesehen sein. Vorzugsweise handelt es sich um eine einzige Spannrolle die insbesondere an der dem Antriebsrad abgewandten Seite des flexiblen Hülltriebstrangs gegen den Hülltriebstrang anliegt. Durch Anordnung zwischen dem Antriebsrad und dem Drehlagerring kann die Spannrolle auch dazu genutzt werden, den Umschlingungswinkel des Antriebsstrangs zu vergrößern.

Die Position des Antriebsrades oder/und die Position der Spannrolle kann bzw. können verstellbar sein.

Während es möglich wäre, sämtliche Rotorblätter eines Rotors durch eine einzige Motor-/Getriebeeinheit nacheinander individuell zu verstellen, ist in der bevorzugten Ausführungsform der Erfindung jedem Rotorblatt der Windenergieanlage eine Motor-/ Getriebeeinheit zugeordnet.

In einer Ausführungsform der Erfindung weist der Zahnriemen ein Karbonmaterial auf, wobei insbesondere ein den Zahnriemen verstärkender Zugträger aus einem solchen Material hergestellt ist.

Als Grundmaterial für den Zahnriemen wird zweckmäßig Polyurethan eingesetzt.

Es versteht sich, dass der Hülltriebstrang mehrteilig ausgebildet und z.B. aus mehreren zueinander parallelen Zahnriemen bestehen kann.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: eine schematische Darstellung einer erfindungsgemäßen Vorrichtung in Seitenansicht,
- Fig. 2: die Vorrichtung von Fig. 1 in einer Draufsicht,
- Fig. 3: eine Teildarstellung der Vorrichtung von Fig. 1 in einer geschnittenen Seitenansicht, und
- Fig. 4: ein zweites Ausführungsbeispiel für eine Vorrichtung nach der Erfindung in einer Draufsicht.

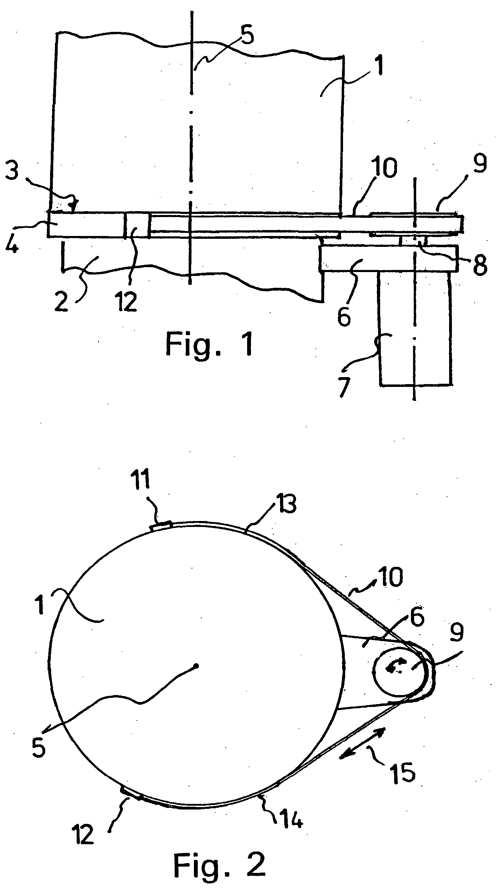

Ein in Fig. 1 dargestellter Endabschnitt eines Rotorblattes 1 einer Windenergieanlage ist mit einer in Fig. 1 teilweise gezeigten Rotornabe 2 verbunden. Auf der Rotornabe 2 sitzen zwei weitere solche Rotorblätter (nicht gezeigt), wobei zwischen den drei Rotorblättern ein Winkelabstand von 120° besteht.

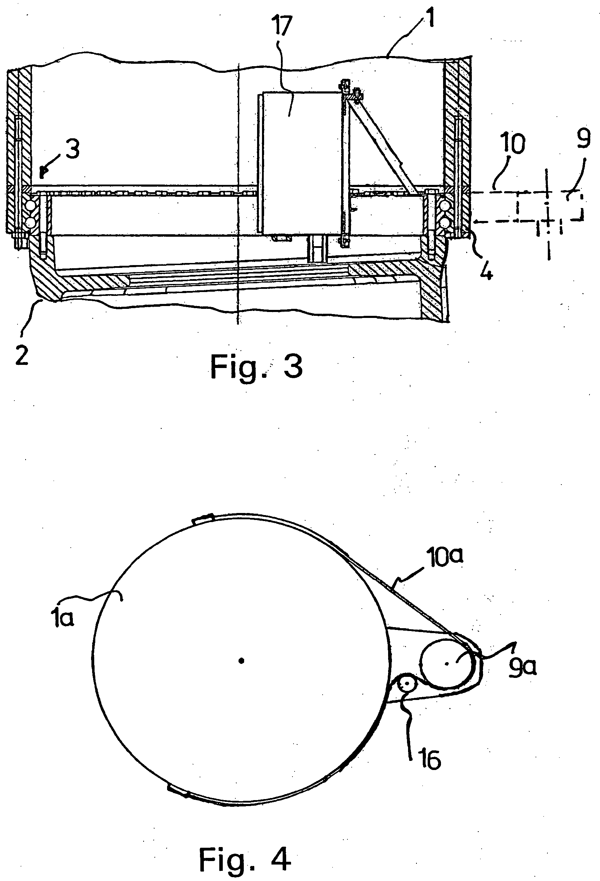

Die Verbindung zwischen dem Rotorblatt 1 und der Rotornabe 2 ist über ein insbesondere in Fig. 3 erkennbares Drehlager 3 hergestellt. Das Drehlager 3 weist einen äußeren Drehlagerring 4 auf, welcher ein Endstück des Rotorblattes 1 bildet.

Das Drehlager 3 erlaubt eine Drehung des Rotorblattes um seine Längsachse 5 und damit eine Veränderung des Anstellwinkels des Rotorblattes gegen die Windrichtung.

Auf der dem anströmenden Wind zugewandten Seite der Rotornabe 2 ist an der Rotornabe über einen Trägerbock 6 eine Motor-/Getriebeeinheit 7 angebracht.

Durch die Motor-/Getriebeeinheit 7 ist über eine Welle 8 eine Riemenscheibe 9 drehbar.

Um die Riemenscheibe 9 ist ein flexibler, durch einen vorzugsweise gezahnten Riemen gebildeter Hülltriebstrang 10 gelegt. An den beiden Enden des offenen Hülltriebstrangs sind das Riemenende einklemmende Endstücke 11 und 12 vorgesehen, durch die jeweils eine Verbindung, z.B. eine Schraubverbindung, zwischen dem Hülltriebstrang 10 und dem Drehlagerring 4 hergestellt ist. In Bereichen 13 und 14 umschlingt der Hülltriebstrang 10 den Drehlagerring 4 über einen Teil von dessen Umfang.

Zur Verstellung des Anstellwinkels des Rotorblattes 1 wird nach Entriegelung einer das Rotorblatt in einer bestimmten Drehstellung haltenden Arretiereinrichtung 17, die Motor-/Getriebeeinheit 7 in Betrieb gesetzt. Je nach Drehrichtung der Welle 8 bewegt die Riemenscheibe 9 den Hülltriebstrang 10 gemäß Doppelpfeil 15, wobei der Hülltriebstrang 10 diese Bewegung in eine entsprechende Drehung des Rotorblatts 1 um die Achse 5 umsetzt.

Bei der Verstellung des Rotorblatts übt jeweils eines der beiden Enden des Hülltriebstrangs 10 eine Zugkraft aus, während das jeweilige andere Ende durch das gedrehte Rotorblatt gezogen wird. Die Rolle 9 sorgt ferner für eine ausreichende Spannung des Hülltriebstrangs 10. Die Länge des Hülltriebstrangs ist derart bemessen, dass ein gewünschter Drehwinkelbereich zur Verfügung steht.

Während bei dem Ausführungsbeispiel von Fig. 1 bis 3 die Riemenscheibe 9 allein für die Spannung des Hülltriebstrangs 10 sorgt, ist bei dem Ausführungsbeispiel von Fig. 4 eine Spannrolle 16 vorgesehen, welche auf der einer Riemenscheibe 1 a gegenüberliegenden Seite eines Hülltriebstrangs 10a an dem Hülltriebstrang angreift und ihn gespannt hält.

Insbesondere bei dem Ausführungsbeispiel gemäß Fig. 1 bis 3 kann der Hülltriebstrang 10 durch eine Kette gebildet sein, wobei die Riemenscheibe durch ein Kettenrad ersetzt ist.

## Patentansprüche

1. Vorrichtung zur Verstellung des Anstellwinkels eines Rotorblattes (1) einer Windenergieanlage, mit einem flexiblen, durch ein Antriebsrad (9,9a) bewegbaren Hülltriebstrang (10,10a), über den das Rotorblatt (1) in entgegengesetzten Richtungen um seine Längsachse drehbar ist, wobei der Hülltriebstrang (10,10a) in nur einer einzigen, zur Drehachse des Antriebsrads (9,9a) senkrechten Ebene bewegbar ist und an einem ein Endstück des Rotorblattes (1) bildenden Drehlagerring (4) angreift, und wobei das Antriebsrad (9,9a) mit einer an der Nabe (2) des Rotorblatts (1) montierten Motor-/Getriebeeinheit (7) zur individuellen Verstellung des Rotorblattes verbunden ist,
**dadurch gekennzeichnet,**
**dass** der Hülltriebstrang (10) offen und an seinen Enden mit dem Drehlagerring (4) verbunden ist.

2. Vorrichtung nach Anspruch 1,
**dadurch gekennzeichnet,**
**dass** der Hülltriebstrang (10) in jeder Drehposition des Rotorblattes (1) den Drehlagerring (4) über einen Teil (13,14) seines Umfangs umschlingt.

3. Vorrichtung nach Anspruch 1 oder 2,
**dadurch gekennzeichnet,**
**dass** der flexible Hülltriebstrang (10) an den Enden jeweils über ein massives Endstück (11,12) mit dem Drehlagerring (4) verbunden ist.

4. Vorrichtung nach einem der Ansprüche 1 bis 3,
**dadurch gekennzeichnet,**
**dass** der flexible Hülltriebstrang (10) einen Zahnriemen oder/und eine Kette umfasst.

5. Vorrichtung nach einem der Ansprüche 1 bis 4,
**dadurch gekennzeichnet,**
**dass** der flexible Hülltriebstrang (10,10a) allein durch das Antriebsrad (9,9a) oder/und durch eine Spannrolle (16) gespannt ist.

6. Vorrichtung nach Anspruch 5,
**dadurch gekennzeichnet,**
**dass** eine einzige Spannrolle (16) vorgesehen ist.

7. Vorrichtung nach Anspruch 5 oder 6,
**dadurch gekennzeichnet,**
**dass** die Spannrolle (16) an der dem Antriebsrad (9a) abgewandten Seite des flexiblen Hülltriebstrangs (10a) gegen den Hülltriebstrang (10a) anliegt.

8. Vorrichtung nach einem der Ansprüche 5 bis 7,
**dadurch gekennzeichnet,**
**dass** die Position des Antriebsrades (9,9a) oder/und die Position der Spannrolle (16) verstellbar ist bzw. sind.

9. Vorrichtung nach einem der Ansprüche 1 bis 8,
**dadurch gekennzeichnet,**
**dass** der Drehlagerring auf seiner dem Hülltriebstrang (10) zugewandten Seite mindestens im Umschlingungsbereich wenigstens teilweise gezahnt ist.

10. Vorrichtung nach einem der Ansprüche 4 bis 9,
**dadurch gekennzeichnet,**
**dass** der Zahnriemen ein Karbonmaterial aufweist und insbesondere einen Zugträger aus Karbonmaterial umfasst.

11. Vorrichtung nach einem der Ansprüche 4 bis 10,
**dadurch gekennzeichnet,**
**dass** der Zahnriemen als Grundmaterial Polyurethan aufweist.

12. Vorrichtung nach einem der Ansprüche 4 bis 11,
**dadurch gekennzeichnet,**
**dass** die Kette eine Zahnkette umfasst, insbesondere eine Wiegegelenk-Zahnkette.

13. Vorrichtung nach einem der Ansprüche 1 bis 12,
**dadurch gekennzeichnet,**
**dass** der Hülltriebstrang (10,10a) mit dem Drehlagerring (4) jeweils über ein massives Endstück (11,12), welches eine Klemmhalterung für den übrigen Hülltriebstrang (10) bildet, verbunden ist und durch Verschiebung der Verbindungsposition einer oder beider Klemmhalterungen in Umfangsrichtung am Drehlagerring (4) spannbar ist.

14. Vorrichtung nach einem der Ansprüche 5 bis 13,
**dadurch gekennzeichnet,**
**dass** die Spannrolle (16) zur Vergrößerung eines Umschlingungswinkels des Hülltriebstrangs (10,10a) zwischen dem Antriebsrad (9,9a) und dem Drehlagerring (4) angeordnet ist.

## Claims

1. Apparatus for adjusting the pitch angle of a rotor blade (1) of a wind energy installation, having a flexible envelope drive train (10, 10a) which can be moved by a drive wheel (9, 9a) and via which the rotor blade (1) can be rotated in opposite directions about its longitudinal axis, wherein the envelope drive train (10, 10a) can be moved on only a single plane, which is at right angles to the rotation axis of the drive wheel (9, 9a), and acts on a rotating bearing ring (4) which forms an end piece of the rotor blade (1), and wherein the drive wheel (9, 9a) is connected to a motor/gearbox unit (7), which is mounted on the hub (2) of the rotor blade (1), for individual adjustment of the rotor blade, **characterized in that** the envelope drive train (10) is open and is connected at its ends to the rotating bearing ring (4).

2. Apparatus according to Claim 1, **characterized in that** the envelope drive train (10) loops around the rotating bearing ring (4) over a part (13, 14) of its circumference in each rotation position of the rotor blade (1).

3. Apparatus according to Claim 1 or 2, **characterized in that** the flexible envelope drive train (10) is connected at each of the ends via a solid end piece (11, 12) to the rotating bearing ring (4).

4. Apparatus according to one of Claims 1 to 3, **characterized in that** the flexible envelope drive drain (10) comprises a toothed belt and/or a chain.

5. Apparatus according to one of Claims 1 to 4, **characterized in that** the flexible envelope drive train (10, 10a) is stressed solely by the drive wheel (9, 9a) and/or by a tensioning roller (16).

6. Apparatus according to Claim 5, **characterized in that** a single tensioning roller (16) is provided.

7. Apparatus according to Claim 5 or 6, **characterized in that** the tensioning roller (16) rests against the envelope drive train (10a) on that side of the flexible envelope drive train (10a) which is remote from the drive wheel (9a).

8. Apparatus according to one of Claims 5 to 7, **characterized in that** the position of the drive wheel (9, 9a) and/or the position of the tensioning roller (16) are/is adjustable.

9. Apparatus according to one of Claims 1 to 8, **characterized in that** the rotating bearing ring is at least partially toothed, at least in the looping-around area, on its side facing the envelope drive train (10).

10. Apparatus according to one of Claims 4 to 9, **characterized in that** the toothed belt has a carbon material and, in particular, comprises a tension member composed of carbon material.

11. Apparatus according to one of Claims 4 to 10, **characterized in that** the toothed belt has polyurethane as the basic material.

12. Apparatus according to one of Claims 4 to 11, **characterized in that** the chain comprises a toothed chain, in particular a cradle-type toothed chain.

13. Apparatus according to one of Claims 1 to 12, **characterized in that** the envelope drive train (10, 10a) is connected to the rotating bearing ring (4) in each case via a solid end piece (11, 12) which forms a clamping holder for the rest of the envelope drive train (10) and can be stressed by moving the connecting position of one or both clamping holders in the circumferential direction on the rotating bearing ring (4).

14. Apparatus according to one of Claims 5 to 13, **characterized in that** the tensioning roller (16) is arranged between the drive wheel (9, 9a) and the rotating bearing ring (4) in order to increase the looping-around angle of the envelope drive train (10, 10a).

## Revendications

1. Dispositif pour le réglage de l'angle d'incidence d'une pale (1) de rotor d'une éolienne, présentant une chaîne de transmission (10, 10a) par élément souple, pouvant être entraînée par une roue d'entraînement (9, 9a), permettant de faire tourner la pale (1) de rotor dans des sens opposés autour de son axe longitudinal, la chaîne de transmission (10, 10a) par élément souple ne pouvant être entraînée que dans un seul plan perpendiculaire à l'axe de rotation de la roue d'entraînement (9, 9a) et entrant en prise avec une bague (4) de palier rotatif formant une pièce d'extrémité de la pale (1) de rotor et la roue d'entraînement (9, 9a) étant reliée à une unité moteur/transmission (7) montée sur le moyeu (2) de la pale (1) de rotor pour le réglage individuel de la pale de rotor, **caractérisé en ce que** la chaîne de transmission (10) par élément souple est ouverte et reliée en ses extrémités à la bague (4) de palier rotatif.

2. Dispositif selon la revendication 1, **caractérisé en ce que** la chaîne de transmission (10) par élément souple, dans chaque position de rotation de la pale (1) de rotor, s'enroule autour de la bague (4) de palier rotatif, sur une partie (13, 14) de sa périphérie.

3. Dispositif selon la revendication 1 ou 2, **caractérisé en ce que** la chaîne de transmission (10) par élément souple est reliée en ses extrémités à chaque fois via une pièce d'extrémité massive (11, 12) à la bague (4) de palier rotatif.

4. Dispositif selon l'une quelconque des revendications 1 à 3, **caractérisé en ce que** la chaîne de transmission (10) par élément souple comprend une courroie dentée et/ou une chaîne.

5. Dispositif selon l'une quelconque des revendications 1 à 4, **caractérisé en ce que** la chaîne de transmission (10, 10a) par élément souple est uniquement tendue par la roue d'entraînement (9, 9a) et/ou par un tendeur (16) pour courroie.

6. Dispositif selon la revendication 5, **caractérisé en ce qu'**il n'existe qu'un seul tendeur (16) pour courroie.

7. Dispositif selon la revendication 5 ou 6, **caractérisé en ce que** le tendeur (16) pour courroie se place contre la chaîne de transmission (10a) par élément souple au niveau de la face opposée à la roue d'entraînement (9a) de la chaîne de transmission (10a) par élément souple.

8. Dispositif selon l'une quelconque des revendications 5 à 7, **caractérisé en ce que** la position de la roue d'entraînement (9, 9a) et/ou la position du tendeur (16) pour courroie est/sont réglable(s).

9. Dispositif selon l'une quelconque des revendications 1 à 8, **caractérisé en ce que** la bague du palier rotatif est au moins partiellement dentée, au moins dans la zone d'enroulement, sur sa face orientée vers la chaîne de transmission (10) par élément souple.

10. Dispositif selon l'une quelconque des revendications 4 à 9, **caractérisé en ce que** la courroie dentée présente un matériau carboné et comprend en particulier un support de traction en matériau carboné.

11. Dispositif selon l'une quelconque des revendications 4 à 10, **caractérisé en ce que** la courroie dentée présente du polyuréthane comme matériau de base.

12. Dispositif selon l'une quelconque des revendications 4 à 11, **caractérisé en ce que** la chaîne comprend une chaîne dentée, en particulier une chaîne dentée à articulation à bascule.

13. Dispositif selon l'une quelconque des revendications 1 à 12, **caractérisé en ce que** la chaîne de transmission (10, 10a) par élément souple est reliée à la bague (4) de palier rotatif à chaque fois via une pièce d'extrémité massive (11, 12), qui forme une fixation par serrage pour le reste de la chaîne de transmission (10) par élément souple, et peut être tendue par déplacement de la position de liaison d'une ou des deux fixations par serrage dans le sens périphérique sur la bague (4) de palier rotatif.

14. Dispositif selon l'une quelconque des revendications 5 à 13, **caractérisé en ce que** le tendeur (16) pour courroie est disposé pour agrandir un angle d'enroulement de la chaîne de transmission (10, 10a) par élément souple entre la roue d'entraînement (9, 9a) et la bague (4) de palier rotatif.
